# EUROPEAN PATENT APPLICATION

(11) **EP 4 472 266 A1**
(43) Date of publication of application: **04.12.2024**
(21) Application number: 23753219.7
(22) Date of filing: 10.02.2023
(51) Int. Cl.: H04W 24/02, H04L 41/147, H04L 41/0893, H04W 24/10, H04W 76/00

(54) **METHOD AND DEVICE FOR DETECTING CONFIGURATION AND VIOLATION OF POLICY OF TERMINAL IN WIRELESS COMMUNICATION SYSTEM**

(30) Priority: 11.02.2022 KR 20220018370
(71) Applicant: Samsung Electronics Co., Ltd, Suwon-si, Gyeonggi-do 16677 (KR)
(72) Inventor: PARK, Jungshin, Suwon-si Gyeonggi-do 16677 (KR); KIM, Hyesung, Suwon-si Gyeonggi-do 16677 (KR); SUH, Dongeun, Suwon-si Gyeonggi-do 16677 (KR)
(74) Representative: HGF
(86) International application number: PCT/KR2023/002016
(87) International publication number: WO 2023/153873

(57) **Abstract**

The present disclosure relates to a 5^{th} generation (5G) or 6^{th} generation (6G) communication system for supporting a higher data transmission rate than a 4^{th} generation (4G) communication system such as long-term evolution (LTE). A method performed by a network data collection and analysis function (NWDAF) in a wireless communication system may comprise the steps of: receiving, from a policy control function (PCF), user equipment (UE) route selection policy (URSP) information relating to a UE policy to be applied to a UE; requesting session information that is being used by the UE, on the basis of the URSP information; requesting a report on traffic information for each application used by the UE on the basis of the URSP and the session information; and receiving the traffic information for each application from the UE.

## Description

### [Technical Field]

The disclosure relates to a method and an apparatus for detecting and controlling policy violation of a terminal in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to monitor whether terminals apply designated policies and control terminals that violate the policies.

### [Disclosure of Invention]

### [Technical Problem]

Disclosed embodiments are to provide an apparatus and a method capable of effectively providing services in a wireless communication system.

### [Solution to Problem]

According to an embodiment of the disclosure, a method performed by a network data collection and analysis function (NWDAF) in a wireless communication system may include receiving, from a policy control function (PCF), user equipment (UE) route selection policy (URSP) information relating to a UE policy to be applied to a UE, requesting session information that is being used by the UE, based on the URSP information, requesting a report on traffic information for each application used by the UE based on the URSP information and the session information, and receiving the traffic information for each application from the UE.

### [Advantageous Effects of Invention]

Disclosed embodiments are to provide an apparatus and a method capable of effectively providing services in a wireless communication system.

### [Brief Description of Drawings]

FIG. 1 is a configuration diagram of a wireless communication network including a network data collection and analysis function (NWDAF) according to an embodiment of the disclosure;
FIG. 2 illustrates an overall structure of a wireless communication system in which a UE receives and applies UE policy information configured by a communication service provider according to an embodiment of the disclosure;
FIG. 3 is a flow diagram illustrating an operation for analyzing a policy application state of a UE according to an embodiment of the disclosure;
FIG. 4 is a flow diagram illustrating an operation of controlling a communication session of a UE that has violated a UE policy according to an embodiment of the disclosure;
FIG. 5 illustrates the structure of a UE according to an embodiment of the disclosure; and
FIG. 6 illustrates the structure of a network entity according to an embodiment of the disclosure.

### [Mode for Carrying out the Invention]

Hereinafter, embodiments of the disclosure will be described in detail in conjunction with the accompanying drawings.

In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the respective drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The following detailed description of embodiments of the disclosure is mainly directed to new radio (NR) as a radio access network and packet core (5G system or 5G core network or next generation core (NG Core)) as a core network in the 5G mobile communication standards specified by the 3GPP that is a mobile communication standardization group, but based on determinations by those skilled in the art, the main idea of the disclosure may be applied to other communication systems having similar backgrounds through some modifications without significantly departing from the scope of the disclosure.

In the 5G system, a network data collection and analysis function (NWDAF), which is a network function for analyzing and providing data collected in a 5G network, may be defined to support network automation. The NWDAF may collect/store/analyze information from the 5G network and provide the results to unspecified network functions (NFs), and the analysis results may be used independently in each NF.

The 5G mobile communication system supports the NFs to use the result of collection and analysis of network-related data (hereinafter referred to as network data) through the NWDAF. This is intended to allow each NF to provide the collection and analysis of necessary network data in a centralized form in order to effectively provide its own functions. The NWDAF may collect and analyze network data by using a network slice as a basic unit. However, the scope of the disclosure is not limited to the network slice unit, and the NWDAF may additionally analyze various pieces of information (e.g., quality of service) acquired from a user equipment (UE), a PDU session, an NF status, and/or an external service server.

The result analyzed through the NWDAF may be delivered to each NF that has requested the corresponding analysis result, and the delivered analysis result may be used to optimize network management functions such as quality of service (QoS) guarantee/enhancement, traffic control, mobility management, and load distribution.

A unit node that performs the respective functions provided by the 5G network system may be defined as a network node (NF) (referred to as NF entity or NF node). Each NF may include at least one of, for example, an access and mobility management function (AMF) for managing access of a user equipment (UE) to an access network (AN) and mobility of the UE, a session management function (SMF) for performing session-related management, a user plane function for managing a user data plane, and a network slice selection function (NSSF) for selecting a network slice instance available for the UE.

Based on the above discussion, the disclosure defines a method and an apparatus for detecting and controlling policy violation of a terminal in a wireless communication system.

In addition, the disclosure defines a method and an apparatus for collecting data of a user equipment (UE) by a network entity that provides a function of analyzing and collecting data in a wireless communication system.

In addition, the disclosure defines a method and an apparatus for controlling a signal flow between network function (NF) entities to collect data for application of a policy of a UE.

In addition, the disclosure is to define a method and an apparatus for controlling a signal flow between NF entities for controlling a UE that has violated a policy.

An apparatus and a method according to embodiments of the disclosure enable efficient control of a UE that has violated a policy by using a network entity that provides data analysis and collection functions.

In addition, advantageous effects obtainable from the present disclosure may not be limited to the above mentioned effects, and other effects which are not mentioned may be clearly understood from the following descriptions by those skilled in the art to which the present disclosure pertains.

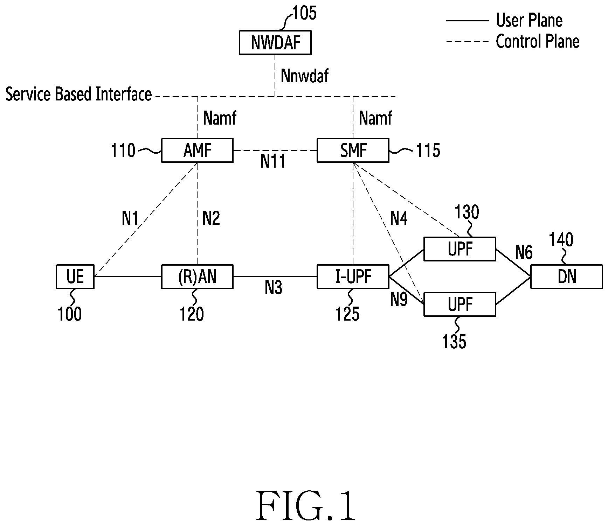

FIG. 1 is a configuration diagram of a wireless communication network including a network data collection and analysis function (NWDAF) according to an embodiment of the disclosure.

Referring to FIG. 1, an NWDAF 105 may collect network data in various manners from at least one source NF, for example, NFs in a 5G core network such as an AMF 110, an SMF 115, or UPFs 125, 130 and 135, an application function (AF) for efficient service provision, a network exposure function (NEF), or an operation, administration, and maintenance (OAM). The AMF 110 may be connected to a UE 100 and a radio access network (RAN) 120, and the UPFs 125, 130, and 135 may connect user traffic of the UE 100 to at least one data network (DN) 140 through the RAN 120.

Further, the NWDAF 105 may provide analytics of network data collected from a network or the outside to at least one consumer NF. The NWDAF 105 may collect and analyze the load level of a network slice instance and provide the same to an NSSF, so as to enable a specific UE to select and use the same. A service-based interface defined in the 5G network may be used to request analysis information or transmit the analysis information including an analysis result between the NFs 110 and 115 and the NWDAF 105, and for example, a hypertext transfer protocol (HTTP) and/or JavaScript object notation (JSON) document may be used for the delivery.

As an example, data collected by the NWDAF 105 may include at least one of an application identity (ID), IP filter information, or a media/application bandwidth from a policy control function (PCF), a UE ID or location information from the AMF 110, a destination data network name (DDN), a UE IP, a QoS flow bit rate, a QoS flow ID (QFI), a QoS flow error rate, or a QoS flow delay from the SMF 115, or a traffic usage report from the UPF.

The NWDAF 105 may additionally collect at least one of, for example, an NF resource status, an NF throughput, or service level agreement (SLA) information from an OAM, which is an entity that may affect a connection between a UE and a service server, a UE status, UE application information, or a UE usage pattern from a UE, or a service application identity, a service experience, or a traffic pattern from an AF, in addition the NFs of the core network, and may use the additionally collected information for analytics.

The following <Table 1> to <Table 3> illustrate examples of network data collected by the NWDAF 105. A period and a time point for network data collection of the NWDAF 105 from an entity may be different for each entity. Besides, the correlation of collected data may be distinguished by a correlation identity (ID) for correlating data of each collection target and a timestamp for recording a collection time.

**[Table 1]**

| **Information** | **Source** | **Description** |
|---|---|---|
| Application ID | AF | To identify the service and support analytics per type of service (the desired level of service) |
| IP filter information | AF | Identify a service flow of the UE for the application |
| Locations of Application | AF/NEF | Locations of application represented by a list of DNAI(s). The NEF may map the AF-Service-Identifier information to a list of DNAI(s) when the DNAI(s) being used by the application are statically defined. |
| Service Experience | AF | Refers to the QoE per service flow as established in the SLA and during on boarding. It can be either e.g. MOS or video MOS as specified in ITU-T P.1203.3 or a customized MOS |
| Timestamp | AF | A time stamp associated to the Service Experience provided by the AF, mandatory if the Service Experience is provided by the ASP. |

**[Table 2]**

| **Information** | **Source** | **Description** |
|---|---|---|
| Timestamp | 5GC NF | A time stamp associated with the collected information. |
| Location | AMF | The UE location information. |
| SUPI(s) | AMF | If UE IDs are not provided as target of analytics reporting for slice service experience, AMF returns the UE IDs matching the AMF event filters. |
| DNN | SMF | DNN for the PDU Session which contains the QoS flow |
| S-NSSAI | SMF | S-NSSAI for the PDU Session which contains the QoS flow |
| Application ID | SMF | Used by NWDAF to identify the application service provider and application for the QoS flow |
| IP filter information | SMF | Provided by the SMF, which is used by NWDAF to identify the service data flow for policy control and/or differentiated charging for the QoS flow |
| QFI | SMF | QoS Flow Identifier |
| QoS flow Bit Rate | UPF | The observed bit rate for UL direction; and |
| | | The observed bit rate for DL direction |
| QoS flow Packet Delay | UPF | The observed Packet delay for UL direction; and |
| | | The observed Packet delay for the DL direction |
| Packet transmission | UPF | The observed number of packet transmission |
| Packet retransmission | UPF | The observed number of packet retransmission |

**[Table 3]**

| **Information** | **Source** | **Description** |
|---|---|---|
| Timestamp | OAM | A time stamp associated with the collected information. |
| Reference Signal Received Power | OAM | The per UE measurement of the received power level in a network cell, including SS-RSRP, CSI-RSRP as specified in clause 5.5 of TS 38.331 and E-UTRA RSRP as specified in clause 5.5.5 of TS 36.331 |
| Reference Signal Received Quality | OAM | The per UE measurement of the received quality in a network cell, including SS-RSRQ, CSI-RSRQ as specified in clause 5.5 of TS 38.331 and E-UTRA RSRQ as specified in clause 5.5.5 of TS 36.331 |
| Signal-to-noise and interference ratio | OAM | The per UE measurement of the received signal to noise and interference ratio in a network cell, including SS-SINR, CSI-SINR, E-UTRA RS-SINR, as specified in clause 5.1 of TS 38.215 |

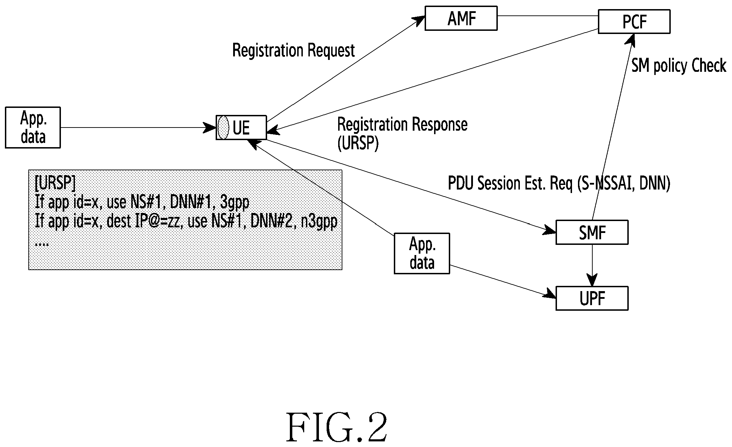

FIG. 2 illustrates an overall structure of a wireless communication system in which a UE receives and applies UE policy information configured by a communication service provider according to an embodiment of the disclosure.

Referring to FIG. 2, in a process of initially accessing a network of a communication system to perform a registration procedure, the UE transfers a registration request message to an AMF via a base station. Further, the AMF requests and receives a UE policy to be applied to the UE in the process of accepting the registration of the UE, i.e., UE route selection policy (URSP) information from a PCF, and includes the URSP information in a registration response message transferred to the UE and transmits the same. In order to transmit data received from an application, the UE determines the type of a PDU session, a network slice, a data network name (DNN), an access type, etc. to be used for data transmission by referring to the UE policy (e.g., URSP) received from the PCF network and, when the corresponding session is not currently established, the UE proceeds with a session establishment procedure by transmitting a request message for session establishment to the network. In this case, the UE policy received from the PCF network being used includes information such as a PDU session type, a network slice, a data network name (DNN), an access type, etc. designated by the service operator for each application ID and traffic filter information (e.g., IP address, TCP port, etc.), and the UE discovers an item corresponding to the application data and applies the item to the data transmission process. In other words, for the transmission of the application data, the UE discovers an item that matches the application ID or traffic filter information, establishes a PDU session of designated type by using the access type, network slice, and data network name (DNN) designated by the corresponding item, and transmits the data through the PDU session. In this case, the DNN is the name of the data network designated for management by a service operator, and corresponds to information used to separate UE traffics according to characteristics and manage the same for purposes such as billing. As for the UE policy information, in addition to the initial registration process, the service operator may transmit the updated policy information to the UE frequently through a UE configuration update procedure and the like. Although the UE generally operates to apply the UE policy, which has been received from the network, during transmission of application data, it is possible to preferentially apply configurations that are randomly changed by a UE user. Such a random change may cause problems such as wasting network resources planned by the service operator or congestion due to traffic being concentrated in one side of the network.

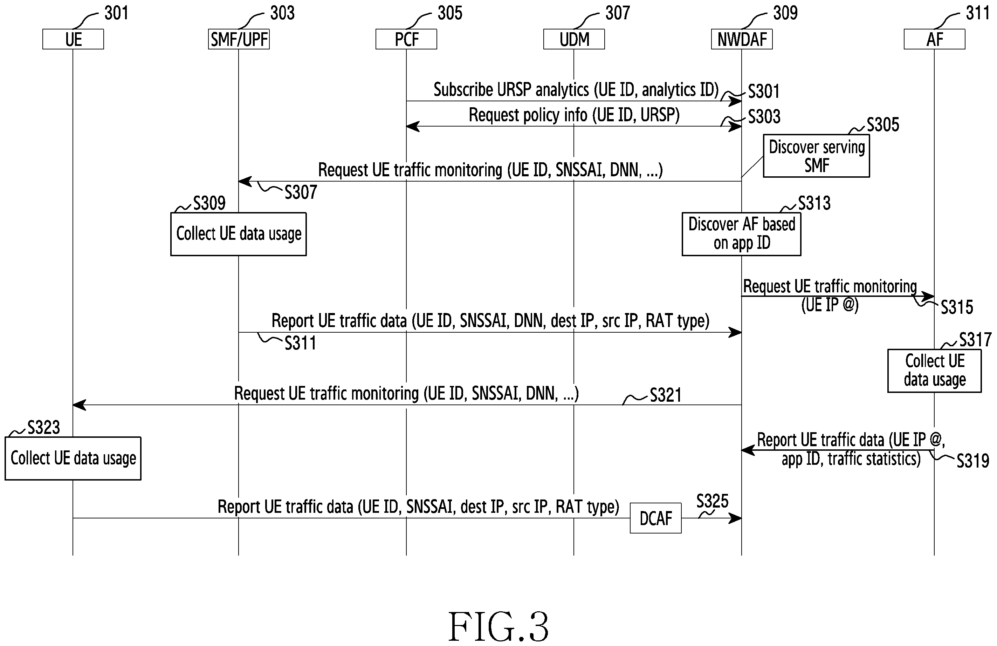

FIG. 3 is a flow diagram illustrating an operation for analyzing a policy application state of a UE according to an embodiment of the disclosure.

Referring to FIG. 3, in operation S301, a PCF 305 may request, from a NWDAF 309, an analysis of whether a UE 301 complies with a UE policy. The UE policy compliance may be based on analyzing of URSP information. The analyzing of the URSP information may include an analysis designated by a UE identity (UE ID) and an analysis ID.

In operation S303, the NWDAF 309 may request, from the PCF, UE policy information being applied to corresponding UE 301. For example, the UE policy information provided by the PCF may include the UE ID and URSP. Of course, this is not limited to the above examples. The NWDAF 309 may receive the requested UE policy information.

In operation S305, the NWDAF 309 may discover a serving SMF responsible for a session of the UE by referring to an NRF and the like.

In operation S307, upon a request of the PCF, the NWDAF 309 may request session information being used by the UE 301 from an SMF/UPF 303 which has been discovered in order to collect data for analysis in operation S305. For example, the session information may include a UE ID, single network slice selection assistance information (S-NSSAI), DNN, and the like. According to an embodiment, the NWDAF 309 may designate only session information corresponding to a specific network slice and DNN and receive the same for each specific period.

In operation 309, the SMF/UPF 303 may collect UE data usage information (UE data usage).

In operation 311, the SMF/UPF 303 may collect session information of the UE 301 designated by the NWDAF 309 and report the collected session information to the NWDAF 309. For example, the reported information may include the UE ID, the used network slice identifier (single network slice selection assistance information (S-NSSAI)), a DNN, and the like. Specifically, the reported information may include the following information in a distinguished manner, such as S-NSSAI, DNN, access type, transmission time, and data size, used for each of {source Ethernet/IP address, source TCP/UDP port, destination Ethernet/IP address, destination TCP/UDP port, protocol type} that the UE 301 has used for data transmission.

In operation 315, the NWDAF 309 may request the AF 311 to collect UE traffic information for each application used by the UE 301. To this end, in operation 313, the NWDAF 309 may extract the application ID included in the UE policy information, which has been received from the PCF in operation 303, and may receive AF information supporting the application ID from an NRF (not shown). Furthermore, the NWDAF 309 may transfer, to the AF 311 identified from the NRF, the IP address of the UE 301 being used by the UE 301 for transmission of application data, and request the AF 311 to collect and transmit information about application traffic of the UE 301 for each period.

In operation 317, according to a request of the NWDAF 309, the AF 311 may collect transmission information of an application traffic using an IP address designated by the NWDAF 309. For example, the application traffic transmission information may be the UE data usage. Of course, this is not limited to the above examples.

In operation 319, the AF 311 may report the application traffic transmission information to the NWDAF 309. For example, the application traffic transmission information may be transmission information of an application traffic using an IP address designated by the NWDAF 309 at the request of the NWDAF 309. According to an embodiment, the information reported to the NWDAF may include each application ID and traffic statistical information (e.g., a source Ethernet/IP address, a source TCP/UDP port, a destination Ethernet/IP address, a destination TCP/UDP port, a protocol type, a transmission time, a data size, etc.) used for the IP address of the UE 301.

In operation 321, the NWDAF 309 may request the UE 301 to collect and report data information transmitted by the UE 301. According to an embodiment, the NWDAF 309 may include, in a request message, a slice identifier, a DNN, an access type, an application ID, a reporting period, etc. to designate the data information to be collected by the UE 301.

In operation 323, the UE 301 may collect the data requested by the NWDAF 309 and report the collected data to the NWDAF 309. For example, the collected information may be the UE data usage.

In operation 325, the UE 301 may report UE traffic data to the NWDAF 309. According to an embodiment, the reported information may include information such as the network slice, DNN, source Ethernet/IP address, source TCP/UDP port, destination Ethernet/IP address, destination TCP/UDP port, protocol type, and access type, radio access technology (RAT) type information, which are used by the UE 301 for data transmission for each application ID, and information such as data transmission time and data size.

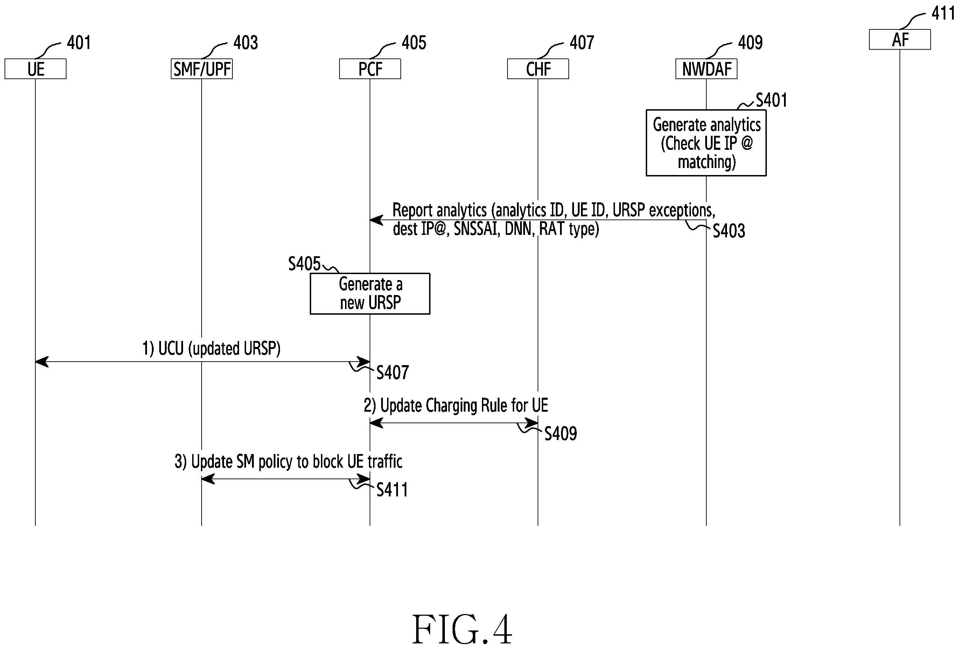

FIG. 4 is a signal flow diagram illustrating operations for controlling a communication session of a UE that has violated a UE policy according to an embodiment of the disclosure.

Referring to FIG. 4, in operation 401, a NWDAF 409 may identify, for each application of a UE 401, traffic filter information such as {a source Ethernet/IP address, a source TCP/UDP port, a destination Ethernet/IP address, a destination TCP/UDP port, a protocol type} used for application transmission, based on the data collected from the SMF/UPF, the AF, and the UE through the process of FIG. 3. The NWDAF 409 may identify the network slice, DNN, access type, and RAT type information, which correspond to the identified traffic filter information and are used in the actual transmission. According to an embodiment, the NWDAF 409 may compare the application ID extracted in the process of FIG. 3 and the network slice, DNN, access type, and RAT type information used in the actual data transmission with the UE policy information received from the PCF. By comparing the extracted application ID and the like with the UE policy information received from the PCF, the NWDAF 409 may determine whether the UE 401 has transmitted the application data in compliance with the UE policy provided by the network.

In operation 403, the NWDAF 409 may identify a UE that has violated the UE policy and transmit analysis information about the UE policy compliance status of the UE 401 to the PCF. According to an embodiment, the UE 401 that has violated the UE policy may be identified by comparing the extracted application ID and the like with the UE policy information received from the PCF. In an embodiment, the UE 401 that has violated the UE policy may be identified based on whether the UE 401 has transmitted application data in compliance with the UE policy provided by the network. The information reported to the PCF may include information enabling the PCF to refer to for establishment of a new UE policy for the UE 401. For example, the information reported to the PCF may include an identifier of the UE 401, a violation type (or item), violated traffic information (destination address, TCP/UDP port, protocol type), a network slice identifier, a DNN, an access type, a RAT type, an application ID, and the like. Of course, this is not limited to the above examples.

In operation 405, the PCF may establish an updated UE policy to be applied to the UE 401, based on the analysis information about the policy compliance status of the UE 401 received from the NWDAF 409. For example, the updated UE policy may be a new URSP. Of course, this is not limited to the above examples.

In operation 407, a PCF 405 may transmit the updated URSP to the UE 401 through a UE configuration update (UCU) procedure. Alternatively, in operation 409, the PCF 405 may establish a new charging rule to be applied to traffic that has violated the UE policy of the UE 401 and transmit the same to the CHF 407. The establishment of the charging rule may be associated with the traffic that has violated the UE policy based on analysis information about the policy compliance status of the UE 401 received from the NWDAF 409. For example, the PCF 405 may modify the charging rules to apply the modified charging rules to traffic that has violated the UE policy. Specifically, the violation of a UE policy may be identified by detecting traffic that is transmitted on a different network slice or using a different DNN, RAT type, access type, and the like. In addition, rules may be provided to charge separately for traffic that has violated the UE policy. Alternatively,

In operation 411, the PCF 405 may transfer new session policy information to an SMF/UPF 403 to disconnect traffic transmission that has violated the UE policy, based on the analysis information about the policy compliance status of the UE 401 received from the NWDAF 409.

Upon receiving the session policy information, the SMF/UPF 403 may perform an operation of discarding packets according to the new session policy transmitted by the PCF 405. The discarded packets may be packets for specific traffic that has violated the UE policy designated by the PCF 405.

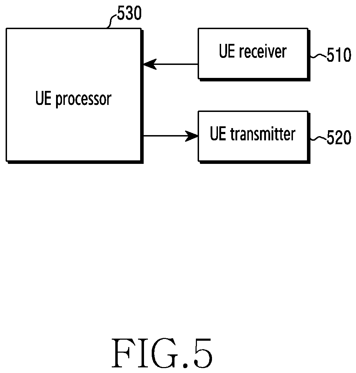

FIG. 5 illustrates the structure of a UE according to an embodiment of the disclosure.

Referring to FIG. 5, the UE may include a UE receiver 510, a UE transmitter 520, and a UE processor (controller) 530.

The UE receiver 510 and the UE transmitter 520 may be collectively referred to as a transceiver. According to the communication method of the UE described above, the UE receiver 510, UE transmitter 520, and UE processor 530 of the UE may operate. However, the elements of the UE are not limited to the examples described above. For example, the UE may include more elements (e.g., a memory, etc.) or fewer elements than the elements described above. In addition, the UE receiver 510, the UE transmitter 520, and the UE processor 530 may be implemented in the form of a single chip.

The UE receiver 510 and the UE transmitter 520 (or the transceiver) may transmit and receive signals to and from a base station. Here, the signal may include control information and data. To this end, the transceiver may be configured by an RF transmitter that up-converts and amplifies the frequency of the transmitted signal, and an RF receiver that amplifies the received signal with low noise and down-converts the frequency. However, this is only an embodiment of the transceiver, and the elements of the transceiver are not limited to the RF transmitter and RF receiver.

Additionally, the transceiver may receive a signal through a wireless channel and output the received signal to the UE processor 530, and may transmit a signal output from the UE processor 530 through a wireless channel.

A memory (not shown) may store programs and data necessary for the operation of the UE. Additionally, the memory may store control information or data included in signals obtained from the UE. The memory may be configured by storage media such as a ROM, a RAM, a hard disk, a CD-ROM, and a DVD, or a combination of storage media.

The UE processor 530 may control a series of processes so that the UE may operate according to the above-described embodiment of the disclosure. The UE processor 530 may be implemented as a circuit, an application-specific integrated circuit, or at least one processor. The UE processor 530 may be implemented as a controller or one or more processors.

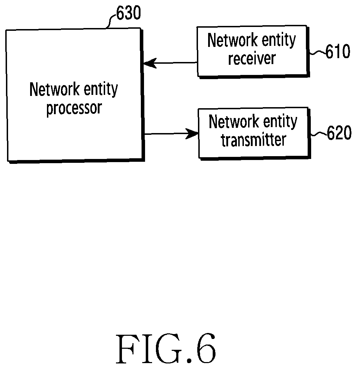

FIG. 6 illustrates the structure of a network entity according to an embodiment of the disclosure.

Referring to FIG. 6, the network entity may include a network entity receiver 610, a network entity transmitter 620, and a network entity processor (controller) 630. Here, the network entity may include an AMF, an SMF, a UPF, a PCF, a UDM, a CHF, an NWDAF, an AF, and the like. According to the disclosure, the network entity may also include a base station.

The network entity receiver 610 and the network entity transmitter 620 may be collectively referred to as a transceiver. According to the communication method of the network entity described above, the network entity receiver 610, network entity transmitter 620, and network entity processor 630 of the network entity may operate. However, the elements of the network entity are not limited to the examples described above. For example, the network entity may include more elements (e.g., a memory, etc.) or fewer elements than the elements described above. In addition, the network entity receiver 610, the network entity transmitter 620, and the network entity processor 630 may be implemented in the form of a single chip.

The network entity receiver 610 and the network entity transmitter 620 (or the transceiver) may transmit and receive signals to and from a base station and/or another network entity. Here, the signal may include control information and data. The transceiver may receive a signal through a wired/wireless channel and output the received signal to the network entity processor 630, and may transmit a signal output from the network entity processor 630 through a wired/wireless channel.

A memory (not shown) may store programs and data necessary for the operation of the network entity. Additionally, the memory may store control information or data included in signals obtained from the network entity. The memory may be configured by storage media such as a ROM, a RAM, a hard disk, a CD-ROM, and a DVD, or a combination of storage media.

The network entity processor 630 may control a series of processes so that the network entity may operate according to the above-described embodiment of the disclosure. The network entity processor 630 may be implemented as a controller or one or more processors.

According to various embodiments of the disclosure, a method performed by a policy control function (PCF) entity in a wireless communication system may include transmitting, to a network data collection and analysis function (NWDAF) entity, a first message requesting analysis of user equipment (UE) route selection policy (URSP) information to identify whether a UE complies with a policy, receiving a second message including analysis information about the URSP information from the NWDAF entity, updating the URSP information of the UE, based on the analysis information about the URSP information, and transmitting a third message including the updated URSP information to the UE.

According to an embodiment of the disclosure, the method may further include transmitting a message including session policy information updated based on the updated URSP information to at least one of a session management function (SMF) entity or a user plane function (UPF) entity.

According to an embodiment of the disclosure, the updated session policy information may include information indicating discarding of data that has violated the updated URSP information.

According to an embodiment of the disclosure, the method may further include transmitting a message including charging policy information updated based on the updated URSP information to a charging function (CHF) entity.

According to an embodiment of the disclosure, the analysis information about the URSP information may include at least one of analysis information about a network slice of the UE, analysis information about a data network name (DNN) of the UE, analysis information about an access type of the UE, and analysis information about a RAT type of the UE, and the analysis information about the network slice of the UE, the analysis information about the data network name (DNN) of the UE, the analysis information about the access type of the UE, and the analysis information about the RAT type of the UE are information based on data transmitted by the UE.

According to various embodiments of the disclosure, a method performed by a network data collection and analysis function (NWDAF) entity in a wireless communication system may include receiving, from a policy control function (PCF) entity, a first message requesting analysis of user equipment (UE) route selection policy (URSP) information for identifying whether a UE complies with a policy, transmitting, to the UE, a second message requesting data information transmitted by the UE, generating analysis information about the URSP information, based on the data information received from the UE, and transmitting, to the PCF entity, a third message including the analysis information about the URSP information.

According to an embodiment of the disclosure, the data information transmitted by the UE further may include at least one of information about a network slice of the UE, information about a data network name (DNN) of the UE, information about an access type of the UE, information about a RAT type of the UE, information about a source Ethernet address of the UE, information about a source Internet protocol (IP) address of the UE, information about a source transfer control protocol (TCP) port of the UE, information about a source user datagram protocol (UDP) port of the UE, information about a destination Ethernet address of the UE, information about a destination IP address of the UE, information about a destination TCP port of the UE, information about a destination UDP port of the UE, information about a protocol type of the UE, information about a data transmission time of the UE, information about a data size of the UE, and information about a network slice used for data transmission by the UE for each application identity.

According to an embodiment of the disclosure, the method may include transmitting a fourth message requesting session information being used by the UE to at least one of a session management function (SMF) entity or a user plane function (UPF) entity, wherein the session information being used by the UE may include at least one of an ID of the UE, single network slice selection assistance information (S-NSSAI) of the UE, or a DNN, and receiving a fifth message including session information being used by the UE, from at least one of the session management function (SMF) entity or the user plane function (UPF) entity.

According to an embodiment of the disclosure, the method may further include transmitting a sixth message requesting application information being used by the UE to an application function (AF) entity, wherein the sixth message may include information about an Internet protocol (IP) address being used for transmission of the application information being used by the UE, and receiving, from the AF entity, a seventh message including application information being used by the UE.

According to an embodiment of the disclosure, the application information being used by the UE may include an ID of each application used in association with the IP address and traffic statistical information, and the traffic statistical information may include at least one of a source Ethernet address, a source IP address, a source transfer control protocol (TCP) port, a source user datagram protocol (UDP) port, a destination Ethernet address, a destination IP address, a destination TCP port, a destination UDP port, a protocol type, a data transmission time, or a data size, which are information related to the UE.

According to various embodiments of the disclosure, a policy control function (PCF) entity in a wireless communication system may include a transceiver, a controller connected to the transceiver, wherein the controller is configured to transmit, to a network data collection and analysis function (NWDAF) entity, a first message requesting analysis of user equipment (UE) route selection policy (URSP) information to identify whether a UE complies with a policy, receive a second message including analysis information about the URSP information from the NWDAF entity, update the URSP information of the UE, based on the analysis information about the URSP information, and transmit a third message including the updated URSP information to the UE.

According to various embodiments of the disclosure, a network data collection and analysis function (NWDAF) entity in a wireless communication system may be configured to receive, from a policy control function (PCF) entity, a first message requesting analysis of user equipment (UE) route selection policy (URSP) information for identifying whether a UE complies with a policy, transmit, to the UE, a second message requesting data information transmitted by the UE, generate analysis information about the URSP information, based on the data information received from the UE, and transmit, to the PCF entity, a third message including the analysis information about the URSP information.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

In addition, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the embodiments of the disclosure, an element included in the disclosure is expressed in the singular or the plural according to presented embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

In the drawings in which methods of the disclosure are described, the order of the description does not always correspond to the order in which steps are performed, and the order relationship between the steps may be changed or the steps may be performed in parallel. In addition, in the drawings in which the embodiments of the disclosure are described, some of the elements may be omitted and only the other elements may be included without departing from the essential spirit and scope of the disclosure.

In the embodiments of the disclosure, some or all of the contents of each embodiment may be implemented in combination without departing from the essential spirit and scope of the disclosure.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented.

## Claims

1. A method performed by a policy control function (PCF) entity in a wireless communication system, the method comprising:
transmitting, to a network data collection and analysis function (NWDAF) entity, a first message requesting analysis of user equipment (UE) route selection policy (URSP) information to identify whether a UE complies with a policy;
receiving a second message including analysis information about the URSP information from the NWDAF entity;
updating the URSP information of the UE, based on the analysis information about the URSP information; and
transmitting a third message including the updated URSP information to the UE.

2. The method of claim 1, further comprising transmitting a message including session policy information updated based on the updated URSP information to at least one of a session management function (SMF) entity or a user plane function (UPF) entity.

3. The method of claim 2, wherein the updated session policy information comprises information indicating discarding of data that has violated the updated URSP information.

4. The method of claim 1, further comprising transmitting a message including charging policy information updated based on the updated URSP information to a charging function (CHF) entity.

5. The method of claim 1, wherein the analysis information about the URSP information comprises at least one of analysis information about a network slice of the UE, analysis information about a data network name (DNN) of the UE, analysis information about an access type of the UE, and analysis information about a RAT type of the UE; and
wherein the analysis information about the network slice of the UE, the analysis information about the data network name (DNN) of the UE, the analysis information about the access type of the UE, and the analysis information about the RAT type of the UE are information based on data transmitted by the UE.

6. A method performed by a network data collection and analysis function (NWDAF) entity in a wireless communication system, the method comprising:
receiving, from a policy control function (PCF) entity, a first message requesting analysis of user equipment (UE) route selection policy (URSP) information for identifying whether a UE complies with a policy;
transmitting, to the UE, a second message requesting data information transmitted by the UE;
generating analysis information about the URSP information, based on the data information received from the UE; and
transmitting, to the PCF entity, a third message including the analysis information about the URSP information.

7. The method of claim 6, wherein the data information transmitted by the UE further comprises at least one of information about a network slice of the UE, information about a data network name (DNN) of the UE, information about an access type of the UE, information about a RAT type of the UE, information about a source Ethernet address of the UE, information about a source Internet protocol (IP) address of the UE, information about a source transfer control protocol (TCP) port of the UE, information about a source user datagram protocol (UDP) port of the UE, information about a destination Ethernet address of the UE, information about a destination IP address of the UE, information about a destination TCP port of the UE, information about a destination UDP port of the UE, information about a protocol type of the UE, information about a data transmission time of the UE, information about a data size of the UE, and information about a network slice used for data transmission by the UE for each application identity.

8. The method of claim 6, comprising:
transmitting a fourth message requesting session information being used by the UE to at least one of a session management function (SMF) entity or a user plane function (UPF) entity, wherein the session information being used by the UE comprises at least one of an ID of the UE, single network slice selection assistance information (S-NSSAI) of the UE, or a DNN; and
receiving a fifth message including session information being used by the UE, from at least one of the session management function (SMF) entity or the user plane function (UPF) entity.

9. The method of claim 6, further comprising:
transmitting a sixth message requesting application information being used by the UE to an application function (AF) entity, wherein the sixth message comprises information about an Internet protocol (IP) address being used for transmission of the application information being used by the UE; and
receiving, from the AF entity, a seventh message including application information being used by the UE.

10. The method of claim 9, wherein the application information being used by the UE comprises an ID of each application used in association with the IP address and traffic statistical information; and
wherein the traffic statistical information comprises at least one of a source Ethernet address, a source IP address, a source transfer control protocol (TCP) port, a source user datagram protocol (UDP) port, a destination Ethernet address, a destination IP address, a destination TCP port, a destination UDP port, a protocol type, a data transmission time, or a data size, which are information associated with the UE.

11. A policy control function (PCF) entity in a wireless communication system, the PCF entity comprising:
a transceiver,
a controller connected to the transceiver,
wherein the controller is configured to:
transmit, to a network data collection and analysis function (NWDAF) entity, a first message requesting analysis of user equipment (UE) route selection policy (URSP) information to identify whether a UE complies with a policy;
receive a second message including analysis information about the URSP information from the NWDAF entity;
update the URSP information of the UE, based on the analysis information about the URSP information; and
transmit a third message including the updated URSP information to the UE.

12. The PCF entity of claim 11, wherein the controller is further configured to transmit a message including session policy information updated based on the updated URSP information to at least one of a session management function (SMF) entity or a user plane function (UPF) entity.

13. The PCF entity of claim 12, wherein the updated session policy information comprises information indicating discarding of data that has violated the updated URSP information.

14. The PCF entity of claim 11, wherein the controller is further configured to transmit a message including charging policy information updated based on the updated URSP information to a charging function (CHF) entity.

15. A network data collection and analysis function (NWDAF) entity in a wireless communication system, wherein the NWDAF entity is configured to:
receive, from a policy control function (PCF) entity, a first message requesting analysis of user equipment (UE) route selection policy (URSP) information for identifying whether a UE complies with a policy;
transmit, to the UE, a second message requesting data information transmitted by the UE;
generate analysis information about the URSP information, based on the data information received from the UE; and
transmit, to the PCF entity, a third message including the analysis information about the URSP information.
